(19) Europäisches Patentamt
European Patent Office
Office européen des brevets

(11) **EP 4 644 846 A1**

(12) **EUROPEAN PATENT APPLICATION**

(43) Date of publication:
**05.11.2025 Bulletin 2025/45**

(21) Application number: **24173994.5**

(22) Date of filing: **03.05.2024**

(51) International Patent Classification (IPC):
**G01F 9/00** *(2006.01)*      **F02D 25/00** *(2006.01)*
**F02D 45/00** *(2006.01)*      **B60K 15/03** *(2006.01)*
**G01F 23/14** *(2006.01)*

(52) Cooperative Patent Classification (CPC):
**G01F 9/00; G01F 9/008;** B60K 2015/03217;
F02D 41/22; F02D 41/2451; F02D 2200/0625;
G01F 23/14

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **VOLVO TRUCK CORPORATION**
**405 08 Göteborg (SE)**

(72) Inventors:
• **POUSSIN, Olivier**
  **69008 LYON (FR)**
• **THERIEN, Julien**
  **01340 MARSONNAS (FR)**
• **KHOURY, Jean**
  **69007 LYON (FR)**

(74) Representative: **Ström & Gulliksson AB**
**P.O. Box 4188**
**203 13 Malmö (SE)**

Remarks:
Claims filed after the date of filing of the application
(Rule 68(4) EPC).

(54) **DETERMINING FUEL UTILISATION IN A VEHICLE**

(57)      A computer system comprising processing circuitry configured to acquire fuel depletion data for a fuel tank of the vehicle for a period, acquire activation data corresponding to the period for a plurality of fuel utilisers comprising an engine that consumes fuel from the fuel tank and an auxiliary system that is driven by the engine, and determine a fuel utilisation of at least two of the plurality of fuel utilisers during the period based on the fuel depletion data and the activation data for the plurality of fuel utilisers.

**FIG. 1A**

**EP 4 644 846 A1**

**Description**

**TECHNICAL FIELD**

The disclosure relates generally to vehicle operation. In particular aspects, the disclosure relates to determining fuel utilisation in a vehicle. The disclosure can be applied in heavy-duty vehicles, such as trucks, buses, and construction equipment. In particular, the disclosure can be applied in multi-unit vehicle combinations with distributed propulsion and energy storage. Although the disclosure may be described with respect to a particular vehicle, the disclosure is not restricted to any particular vehicle.

**BACKGROUND**

In vehicle operation, it is important to measure fuel consumption for a number of reasons, for example vehicle efficiency and environmental concerns. Modern vehicles may comprise a number of systems that consume fuel, for example internal combustion engines (ICEs), power take-off (PTO), parking heaters, trailers with refrigerator or freezer functionality, and the like. Monitoring the fuel utilisation and/or efficiency of these various systems is important to ensure efficient and sustainable operation of the vehicle.

It is therefore desired to develop a solution for vehicle operation that addresses or at least mitigates some of these issues.

**SUMMARY**

This disclosure provides systems, methods and other approaches for determining the fuel utilisation of the different systems in a vehicle. The systems include a plurality of fuel utilisers comprising one or more engines that consume fuel from a fuel tank, and/or one or more auxiliary systems that are driven by the one or more engines. In particular, fuel depletion data can be acquired for a period when these systems are running. In some scenarios, certain consumers will run simultaneously, while in other cases a consumer may run alone. Activation data of the systems can also be acquired, for example including a run time of each of the systems. Based on this data, the fuel utilisation of each system can be determined. This allows the highest fuel consumers to be identified for improvement or maintenance, or for any errors of faults to be determined based on deviation from expected values.

According to a first aspect of the disclosure, there is provided a computer system comprising processing circuitry configured to acquire fuel depletion data for a fuel tank of a vehicle for a period, acquire activation data corresponding to the period for a plurality of fuel utilisers comprising at least one of an engine that consumes fuel from the fuel tank and an auxiliary system that is driven by the engine, and determine a fuel utilisation of at least two of the fuel utilisers during the period based on the fuel depletion data and the activation data for the plurality of fuel utilisers.

The first aspect of the disclosure may seek to provide a computer system that accurately determines fuel utilisation of different fuel utilisers operating at different levels of a vehicle. A technical benefit may include that the fuel efficiency of each fuel utiliser can be determined and tracked over time, such that the computer system is able to identify the highest fuel utilisers. Further, any issues causing an increase in fuel consumption may be diagnosed, range estimation may be refined and the $CO_2$ emissions of the vehicle may be tracked more precisely. Actions can be taken in the case of any deviation from expected values, thereby enabling improvements in vehicle performance or maintenance.

Optionally in some examples, including in at least one preferred example, the processing circuitry is configured to acquire the fuel depletion data by determining a pressure change in the fuel tank over the period and determining a fuel depletion volume based on the determined pressure change and the volume of the fuel tank. A technical benefit may include that fuel depletion data can be estimated precisely by determining a pressure change, for example a hydrostatic pressure change, using a single sensor in the fuel tank of the vehicle. This is a simpler solution than providing the vehicle with multiple sensors, for example flowmeters, for determining fuel depletion data.

Optionally in some examples, including in at least one preferred example, the processing circuitry is configured to acquire the fuel depletion data by determining flow rate data of fuel flowing from the fuel tank over the period and determining a fuel depletion volume based on the determined flow rate data. A technical benefit may include that the fuel consumption on a specific fuel line can be measured directly by a dedicated flowmeter.

Optionally in some examples, including in at least one preferred example, the plurality of fuel utilisers comprises one or more primary auxiliary systems that are coupled to and driven by the engine and one or more secondary auxiliary systems that are driven by the one or more primary auxiliary systems. A technical benefit may include that the fuel utilisation of systems that operate at further levels of the vehicle may be determined.

Optionally in some examples, including in at least one preferred example, the processing circuitry is configured to determine a fuel utilisation of at least one of at least two engines, at least one engine and at least one auxiliary system, and at least two auxiliary systems. A technical benefit may include that two unknown fuel utilisations may be determined.

Optionally in some examples, including in at least one preferred example, the processing circuitry is further configured to acquire activation data corresponding to the period for one or more further systems that consume fuel from the fuel tank and determine a fuel utilisation of the one or more further systems during the period based on the fuel depletion data and the activation data for the one or more further systems. A technical benefit may include that the fuel consumption of further systems that that consume fuel from the fuel tank but are not coupled to the engine may be determined.

Optionally in some examples, including in at least one preferred example, the processing circuitry is further configured to acquire reference fuel utilisation data for one or more of the plurality of fuel utilisers, determine a difference between the determined fuel utilisation data and the reference fuel utilisation data, compare the determined difference to a threshold, and determine the presence of an error associated with one or more of the plurality of fuel utilisers in response to determining that the difference is larger than the threshold. A technical benefit may include that an error associated with one or more of the fuel utilisers can be determined, meaning an appropriate action can be taken.

Optionally in some examples, including in at least one preferred example, in response to determining the presence of an error, the processing circuitry is further configured to limit operation of one or more of the plurality of fuel utilisers, cause deactivation of the one or more of the plurality of fuel utilisers, and/or provide an alert to an operator of the vehicle. A technical benefit may include that actions can be taken either by the operator or automatically by the system to avoid degraded performance or damage to the vehicle, and a warning or recommendation for maintenance can be issues as appropriate.

Optionally in some examples, including in at least one preferred example, the processing circuitry is configured to set the threshold based on current operating conditions of the vehicle. A technical benefit may include that the threshold is adaptable for different operating conditions of a vehicle which may provide a computer system that more accurately diagnoses fuel inefficiency.

Optionally in some examples, including in at least one preferred example, the processing circuitry is configured to determine the reference fuel utilisation data by acquiring test fuel depletion data for the fuel tank for one or more test periods, acquiring test activation data for at least one of the plurality of fuel utilisers corresponding to each test period, and determining reference fuel utilisation data for at least one of the plurality of fuel utilisers based on the test fuel depletion data and the test activation data. A technical benefit may include that a reference data for a specific vehicle can be determined during vehicle operation, allowing the determined (e.g. current) fuel utilisation of each fuel utiliser assessed reliably.

Optionally in some examples, including in at least one preferred example, the processing circuitry is configured to update the reference fuel utilisation data during the lifetime of the vehicle. A technical benefit may include that the reference data is adjusted to accurately reflect fuel utilisation of the fuel utilisers as it changes over the lifetime of a vehicle.

Optionally in some examples, including in at least one preferred example, the processing circuitry is configured to determine the fuel utilisation based on a set of linear equations describing relative fuel utilisation of the plurality of fuel utilisers. A technical benefit may include that the fuel utilisation of each fuel utiliser of the vehicle can be determined in a computationally simple manner.

According to a second aspect of the disclosure, there is provided a vehicle comprising the computer system of any preceding claim. The second aspect of the disclosure may seek to provide a vehicle capable of accurately determining fuel utilisation of different fuel utilisers operating at different levels of a vehicle. Thereby, the highest fuel utilisers can be identified which allows improvement or maintenance.

According to a third aspect of the disclosure, there is provided a computer-implemented method comprising acquiring, by processing circuitry of a computer system, fuel depletion data for a fuel tank of a vehicle for a period, acquiring, by the processing circuitry, activation data for a plurality of fuel utilisers comprising at least one of an engine that consumes fuel from the fuel tank and an auxiliary system that is driven by the engine, and determining, by the processing circuitry, a fuel utilisation of at least two of the plurality of fuel utilisers during the period based on the fuel depletion data and the activation data for the plurality of fuel utilisers.

The third aspect of the disclosure may seek to provide a computer-implemented method that accurately determines fuel utilisation of different fuel utilisers operating at different levels of a vehicle. A technical benefit may include that the fuel efficiency of each fuel utiliser can be determined and tracked over time, such that the computer system is able to identify the highest fuel utilisers. Further, any issues causing an increase in fuel consumption may be diagnosed, range estimation may be refined and the $CO_2$ emissions of the vehicle may be tracked more precisely. Actions can be taken in the case of any deviation from expected values, thereby enabling improvements in vehicle performance or maintenance.

According to a fourth aspect of the disclosure, there is provided a computer program product comprising program code for performing, when executed by processing circuitry, the computer-implemented method of the third aspect. The fourth aspect of the disclosure may seek to enable new vehicles and/or legacy vehicles to be conveniently configured, by software installation/update, to accurately determine fuel utilisation of different fuel utilisers operating at different levels of a vehicle.

According to a fifth aspect of the disclosure, there is provided a non-transitory computer-readable storage medium comprising instructions, which when executed by processing circuitry, cause the processing circuitry to perform the computer-implemented method of the third aspect. The fifth aspect of the disclosure may seek to seek to enable new vehicles and/or legacy vehicles to be conveniently configured, by software installation/update, to accurately determine fuel utilisation of different fuel utilisers operating at different levels of a vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

**FIG. 1A** schematically shows the architecture of a vehicle according to an example of the disclosure.
**FIG. 1B** schematically shows a control architecture of a vehicle according to an example of the disclosure.
**FIG. 2** schematically shows a fuel tank in cross section according to an example of the disclosure.
**FIG. 3** is a flow chart of a computer-implemented method according to an example of the disclosure.
**FIG. 4** is a flow chart of a computer-implemented method according to an example of the disclosure.
**FIG. 5** is a plot of fuel utilisation of a component against the internal-ambient temperature difference according to an example of the disclosure.
**FIG. 6** is a schematic diagram of a computer system for implementing examples disclosed herein.

Like reference numerals refer to like elements throughout the description.

## DETAILED DESCRIPTION

The detailed description set forth below provides information and examples of the disclosed technology with sufficient detail to enable those skilled in the art to practice the disclosure.

It is important to measure fuel consumption of vehicles for a number of reasons, for example vehicle efficiency and environmental concerns. Modern vehicles may comprise a number of systems that consume fuel, for example internal combustion engines (ICEs), power take-off (PTO), parking heaters, trailers with refrigerator or freezer functionality, and the like. Monitoring the fuel consumption and/or efficiency of these various systems is important to ensure efficient and sustainable operation of the vehicle.

To remedy this, systems and methods are proposed for determining the fuel utilisation of the different systems in a vehicle. The systems may include one or more engines that consume fuel from a fuel tank, and/or one or more auxiliary systems that are driven by the one or more engines. In particular, fuel depletion data can be acquired for a period when these systems are running. Activation data of the systems can also be acquired, for example including a run time of each of the systems. Based on this data, the fuel utilisation of each system can be determined. This allows the highest fuel consumers to be identified for improvement or maintenance, or for any errors of faults to be determined based on deviation from expected values.

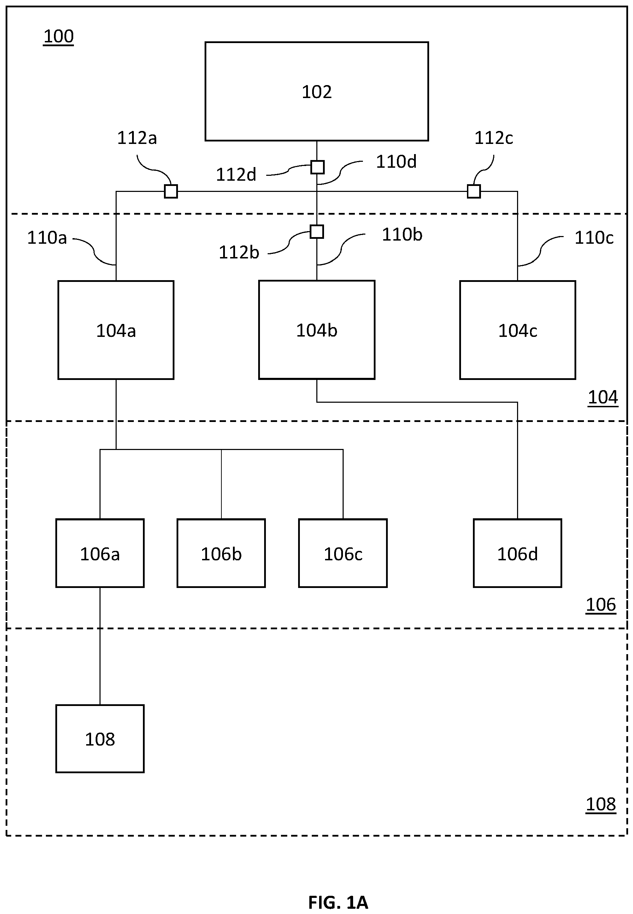

**FIG. 1A** schematically shows the architecture of a vehicle 100 in terms of the components that are run directly or indirectly from fuel in a fuel tank. The vehicle 100 may be any suitable form of vehicle. For example, the disclosure can be applied in heavy-duty vehicles, such as trucks, buses, construction equipment, and multi-unit vehicle combinations, in personal vehicles such as cars, vans, or motorbikes, or in any other suitable form of vehicle. In particular, the disclosure can be applied in multi-unit vehicle combinations.

The vehicle **100** comprises a fuel tank **102,** one or more main systems **104a-c** (which may be referred to generally as main systems **104**), such as engines, that consume fuel from the fuel tank **102**, one or more primary auxiliary systems **106a-d** (which may be referred to generally as primary auxiliary systems **106**) that are coupled to and driven by an engine, and one or more secondary auxiliary systems **108a** (which may be referred to generally as secondary auxiliary systems **108**) that are driven by the main systems **104** via the one or more primary auxiliary systems **106**. The main systems **104**, primary auxiliary systems **106**, and secondary auxiliary systems **108** can be considered as "fuel utilisers", as they use fuel from the fuel tank **102** directly or indirectly to power their operation.

The fuel tank **102** serves as a reservoir for storing the fuel that powers the vehicle. The primary function of the fuel tank **102** is to store fuel safely and securely until it is needed by the main systems **104** for combustion. The fuel in the fuel tank **102** may be petrol (gasoline), diesel, or other fuels such as ethanol, biodiesel, compressed natural gas (CNG), liquefied petroleum gas (LPG), hydrogen, and others. The fuel tank **102** may comprise or be coupled to one or more fuel pumps configured to transfer fuel from the fuel tank **102** to the main systems **104.**

The fuel tank **102** is coupled to the main systems **104** via fuel lines **110.** The fuel lines **110** are configured to transport fuel from the fuel tank **102** to the main systems **104**, where it can be burned to power the vehicle **100** in different ways. The fuel lines **110** connect the outlet or fuel pump of the fuel tank **102** to the engine's fuel injectors or carburettor, depending on the type of fuel delivery system employed by the vehicle **100**. The fuel lines **110** may also be configured to maintain a certain level of pressure to ensure consistent fuel delivery to the main systems **104**. Fuel pressure regulators may be incorporated into the fuel line system to control the pressure and optimize fuel flow. The fuel lines **110** may also be configured to provide filtration, vapour recovery, and/ or heat management functionality.

The fuel lines **110** may comprise an individual fuel line **110a-c** for each respective main system **104**, which stem from a main fuel line **110d.** Each fuel line **110** may have an associated flowmeter **112** configured to measure fuel flow through the respective fuel line **110**. Different combinations of flowmeters **112** may be present dependent on vehicle design. In some examples, only the flowmeters **112a-c** for the individual fuel lines **110a-c** may be present. In some example, only the flowmeter **112d** for the main fuel line **110d** may be present. It will be appreciated that flowmeters **112** may be present in any suitable combination.

The main systems **104** comprise one or more engines **104a, 104b,** and optionally one or more further systems **104c,** that consume fuel from the fuel tank **102.** That is to say, the main systems **104** receive fuel from the fuel tank **102** and burn it to provide some form of energy. The main systems **104** can therefore be considered as "fuel consumers". These main systems **104** may be systems that require high power, for example beyond the capabilities of a batter of the vehicle **100**. It will be appreciated that other main systems **104** that consume fuel from the fuel tank **102** may be present in the vehicle **100.**

The engine **104a** is coupled to the fuel tank **102** via fuel line **110a**. The engine **104a** may be the primary engine of the vehicle **100** configured to generate power to propel the vehicle 100 forward. The engine **104a** is further coupled to one or more primary auxiliary systems **106a-c** that are driven by the engine **104a,** as will be discussed below.

The engine **104b** may be another engine of the vehicle **100** having a specific purpose. The engine **104b** is coupled to the fuel tank **102** via fuel line **110b.** In one example, the engine **104b** may be configured to power a freezer system **106d** of a freezer trailer, for example a compressor and/or fan of the freezer trailer. The freezer system **106d** may also be considered as a primary auxiliary system.

The system **104c** may be another system that consumes fuel from the fuel tank **102,** for example a vehicle parking heater. The system **104c** is coupled to the fuel tank **102** via fuel line **110c.** A vehicle parking heater is a device used to warm the interior of the vehicle **100,** and in some examples the primary engine **104a,** for example while the vehicle is parked and the engine **104a** is turned off. The vehicle parking heater may draw fuel from the fuel tank **102** to generate heat via combustion of the fuel.

As discussed above, the engine **104a** is further coupled to one or more primary auxiliary systems **106a-c** that are driven by the engine **104a.** The primary auxiliary systems **106a-c** are configured to be driven mechanically by the engine **104a,** for example via one or more transmissions or shafts. As such, energy used by the engine **104a** is provided from the engine **104a,** and is therefore part of the total fuel utilisation of the vehicle **100**. The primary auxiliary systems **106a-c** may comprise an alternator **106a,** a power take-off (PTO) **106b,** and/or an air compressor **106c**. It will be appreciated that other auxiliary systems **106** that are driven mechanically by the engine **104a** may be present in the vehicle **100.**

The alternator **106a** is configured to generate electricity. In particular, the alternator **106a** converts mechanical energy from the engine **104a** into electrical energy through electromagnetic induction. This electrical energy may be used to power electrical systems and accessories of the vehicle **100**, for example the secondary auxiliary systems **108**, as will be discussed below. In some examples, the alternator **106a** may comprise a voltage regulator to ensure that the electrical systems operate within a specified voltage range, preventing overcharging of the battery or damage to sensitive electronic components. The alternator **106a** provides a steady source of power, which important during periods of high electrical demand, such as when electrical systems and accessories of the vehicle **100**, for example the secondary auxiliary systems **108**, are in use simultaneously. The alternator **106a** may also act as a backup power source for the vehicle in case of a malfunctioning battery or electrical system.

The PTO **106b** is configured to provide power for additional tasks or functions beyond the primary propulsion of the vehicle **100.** The PTO **106b** enables the engine **104a** to transmit power to external equipment or machinery, for example hydraulic, pneumatic, or mechanical systems associated with the **100**. This may include equipment such as hydraulic pumps, winches, cranes, compressors, generators, and agricultural implements like augers or grain conveyors. A PTO **106b** is commonly found in trucks, commercial vehicles, agricultural machinery, and other specialised vehicles. The PTO **106b** enhances the versatility and efficiency of the vehicle **100** and eliminates the need for separate power sources or engines for auxiliary equipment.

The air compressor **106c** is configured to manage air pressure within various systems of the vehicle **100.** In particular, the alternator **106a** uses mechanical energy from the engine **104a** to provide air compression for a variety of systems. For example, the air compressor **106c** may be used to inflate or maintain the pressure of the tyres of the vehicle **100**. The air compressor **106c** may also be used to manage an air suspension system of the vehicle **100**, where the level of suspension can be adjusted for different driving conditions. The air compressor **106c** may also be used to power air brakes, air conditioning systems, pneumatic tools, etc. of the vehicle **100**.

The freezer system **106d** is configured to maintain specific temperature conditions inside a freezer trailer. In particular, the freezer system **106d** uses mechanical energy from the engine **104b** to power a compressor and/or fan. This provides controlled temperature environments for transporting perishable goods such as food, pharmaceuticals, flowers, and other temperature-sensitive products, especially during transportation of such goods over long distances.

As discussed above, the alternator **106a** is further coupled to one or more secondary auxiliary systems **108** that use electrical energy generated by the alternator **106a**. As such, the one or more secondary auxiliary systems **108** can be considered to be driven by one or more of the primary auxiliary systems **106**, or to be driven by the engine via the one or more primary auxiliary systems **106**. In some examples, the secondary auxiliary systems **108** comprise a steering pump **108a** configured to assist a driver in turning the steering wheel of the vehicle **100** by applying hydraulic pressure to the steering mechanism. In some examples, the secondary auxiliary systems **108** comprise a battery of the vehicle **100**, where the electrical energy generated by the alternator **106a** may be used to recharge the battery while the engine **104a** is running. It will be appreciated that other secondary auxiliary systems **108** that use electrical energy generated by the alternator **106a** may be present in the vehicle **100**, such as a set of headlights, other light systems, an ignition system, an audio system, an air conditioning system, and other electronic devices.

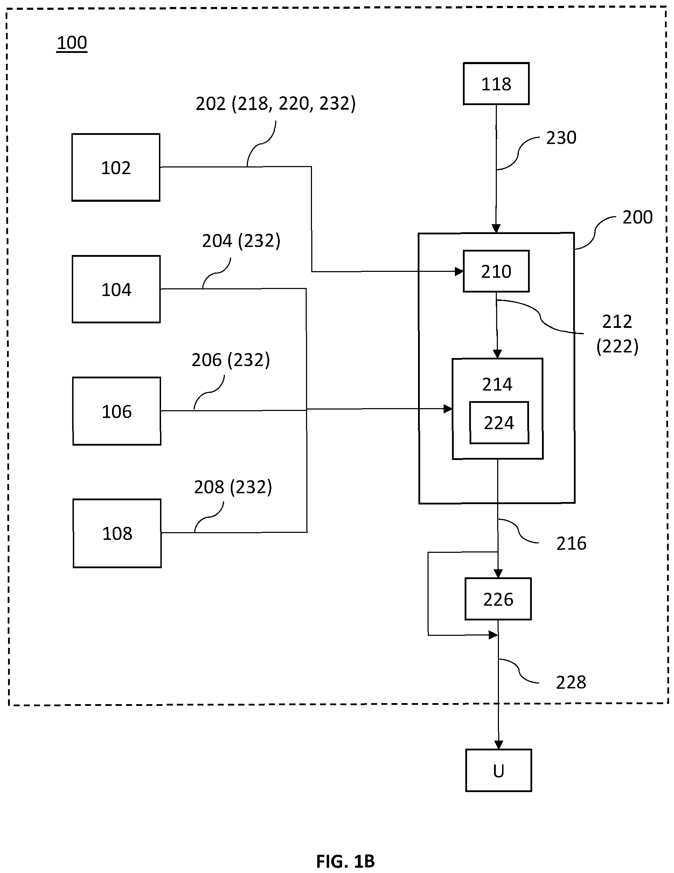

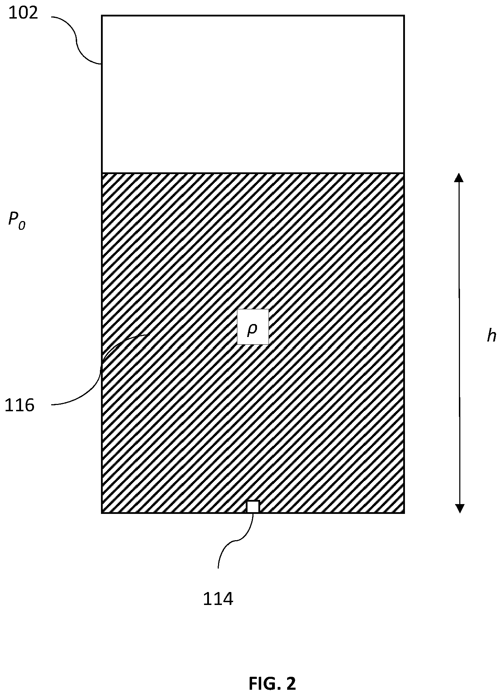

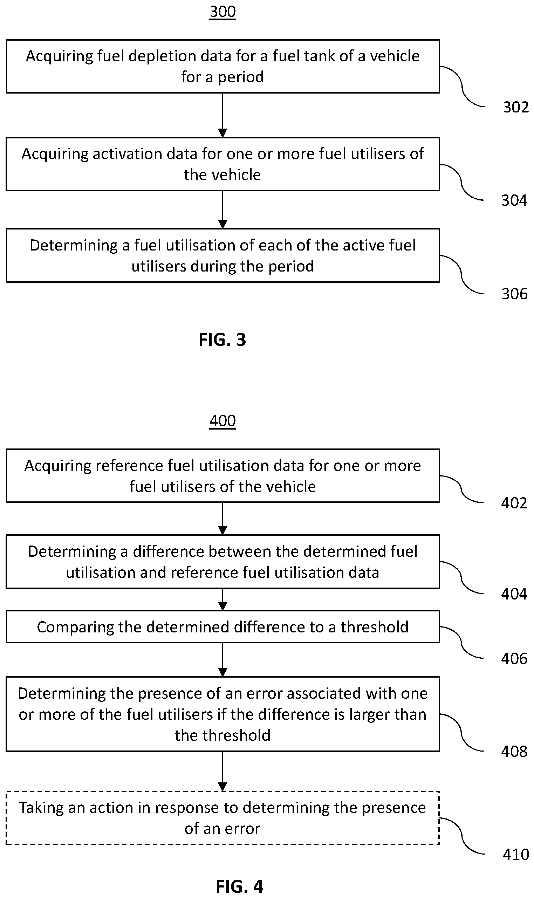

**FIG. 1B** schematically shows an example control architecture of the vehicle **100**. The vehicle **100** comprises a control unit **200**. The control unit **200** is configured to receive sensor data **202** from the fuel tank **102**. The sensor data **202** may be flow rate data **218** from the flowmeter **112d,** or pressure data from a pressure sensor **114**, for example a pressure change **220** (see **FIG. 2**). It will be appreciated that flow rate data **218** may also be received from the flowmeters **112a-c.** The control unit **200** may also be configured to receive data regarding a period **232** of fuel utilisation of the vehicle **100** from the fuel tank **102**. A fuel depletion determiner **210** of the control unit **200** is configured to determine fuel depletion data **212** based on the sensor data **202**, as will be described in relation to **FIGs. 2** and **3**. The fuel depletion data **212** may comprise an amount of fuel that has left the fuel tank **102** (e.g. a fuel depletion volume **222**). The fuel depletion determiner **210** is configured to provide the fuel depletion data **212** to a fuel utilisation determiner **214**. The fuel utilisation determiner **214** is also configured to receive activation data **204, 206, 208** from each of the fuel utilisers **104, 106, 108**. The activation data indicates which of the fuel utilisers **104, 106, 108** was active and for how long, and in particular corresponds to the period **232** of fuel utilisation of the vehicle **100**. As will be described below, the fuel utilisation determiner **214** is configured to determine a fuel utilisation **216** of one or more of the fuel utilisers **104, 106, 108** based on the fuel depletion data **212** and the activation data **204, 206, 208**. The fuel utilisation determiner **214** may determine the fuel utilisation **216** based on a set of linear equations **224** describing relative fuel utilisation of the fuel utilisers. The fuel utilisation **216** may then be reported to an operator U of the vehicle **100**, or to a further module of the control unit **200** such as an error detector **226**. The error detector **226** may compare the fuel utilisation **216** to reference data to determine if an error **228** is present in the vehicle **100**. The error **228** may then be reported to an operator U of the vehicle **100**. The control unit **200** may also be configured to receive data regarding operating conditions **230** of the vehicle **100** (e.g., external temperature, internal temperature) from one or more other sensors **118** of the vehicle **100**.

The examples of **FIG. 1A** and **1B** illustrates that a vehicle **100** may comprise a number of fuel utilisers that are run directly or indirectly from fuel in a fuel tank. If the total fuel consumption of the vehicle **100** is high, the efficiency $CO_2$ emissions of the vehicle **100** will be impacted. However, the actual amount of fuel that is used by each of the fuel utilisers **104, 106, 108** and their efficiency, it not always monitored. For example, these components do not necessarily have a precise fuel utilisation monitor and such information may not be communicated to a vehicle control system or operator. This can have a negative impact on the performance, for example the total range, of the vehicle **100**.

In order to express the relative fuel utilisation of the various components **104, 106, 108,** a set of linear equations can be determined to describe the power/energy relations discussed above. This set of equations is based on the various possible activation states of the fuel utilisers **104, 106, 108** (i.e. whether a component is on or off). Taking the architecture illustrated in **FIG. 1A**, and assuming that the status of the engine **104b** and the freezer system **106d** is considered to be the same (i.e. when the engine **104b** is on, the freezer system **106d** is on, and when the engine **104b** is off, the freezer system **106d** is off), there are 52 possible activation states. In an example where the fuel utilisation of engine **104b** and system **104c** can be measured directly by respective flowmeters **112b** and **112c,** we can consider only the possible activation states of the engine **104a** and its auxiliaries when the engine **104a** is running. There are 12 possible activation states, as shown in **Table 1**.

**Table 1.** Activation states when the engine **104a** is running

| Component | 104a | 106a | 106b | 106c | 108a |
|---|---|---|---|---|---|
| **State 1** | ON | ON | ON | ON | ON |
| **State 2** | ON | ON | ON | OFF | ON |

(continued)

| Component | 104a | 106a | 106b | 106c | 108a |
|---|---|---|---|---|---|
| State 3 | ON | ON | ON | OFF | OFF |
| State 4 | ON | ON | ON | ON | OFF |
| State 5 | ON | ON | OFF | ON | ON |
| State 6 | ON | ON | OFF | OFF | ON |
| State 7 | ON | ON | OFF | OFF | OFF |
| State 8 | ON | ON | OFF | ON | OFF |
| State 9 | ON | OFF | ON | ON | OFF |
| State 10 | ON | OFF | OFF | ON | OFF |
| State 11 | ON | OFF | ON | OFF | OFF |
| State 12 | ON | OFF | OFF | OFF | OFF |
| Note that the steering pump **108a** is off whenever the alternator **106a** is off. | | | | | |

Each state has a corresponding total fuel utilisation $X_1$ to $X_{12}$. This enables a set of linear equations to be formulated describing the fuel utilisation of each fuel utiliser **104, 106, 108.** For this example, the equations are shown in **Table 2.**

**Table 2.** Equations for states in **Table 1**

| | Equation |
|---|---|
| **State 1** | $104a+106a+106b+106c+108a = X_1$ |
| **State 2** | $104a+106a+106b+108a = X_2$ |
| **State 3** | $104a+106a+106b = X_3$ |
| **State 4** | $104a+106a+106b+106c = X_4$ |
| **State 5** | $104a+106a+106c+108a = X_5$ |
| **State 6** | $104a+106a+108a = X_6$ |
| **State 7** | $104a+106a = X_7$ |
| **State 8** | $104a+106a+106c = X_8$ |
| **State 9** | $104a+106b+106c = X_9$ |
| **State 10** | $104a+106c= X_{10}$ |
| **State 11** | $104a+106b= X_{11}$ |
| **State 12** | $104a = X_{12}$ |

The fuel utilisation $X_{12}$ may be determined directly by the flowmeter **112a,** or may be determined based on the total fuel depletion from the fuel tank and the measured consumptions of engine **104b** and system **104c.** The set of linear equations can then be solved to determine the fuel utilisation of the alternator **106a,** the PTO **106b,** the air compressor **106c,** and the steering pump **108a.** The fuel utilisation can be expressed in any suitable units, for example litres per hour (l/h). It will be appreciated that such a set of equations could be determined for any vehicle architecture where the power flows are known. In some examples, a neural network or other machine learning approach can be used instead of the set of equations to determine the fuel utilisation of each fuel utiliser **104, 106, 108,** and also determine trends, deviations over time, or even predictions.

Whilst the fuel utilisation of the main systems (fuel consumers) **104** can be determined using the flowmeters **112,** use of such apparatus is costly, in particular in the case of separated fuel lines. Another approach to measuring the amount of fuel depletion from the fuel tank **102** is to measure a certain distance (for example the height of the fuel level, a distance between the fuel surface and top of the tank **102,** etc.) using a fuel level sensor, and then calculate the volume of fuel remaining in the tank **102** based on the known dimensions of the tank **102.** However, since such measurements are usually only performed at a single location in the tank **102** (usually in the centre), the precision of fuel volume measurements can be compromised when the vehicle **100** is running due to vibrations, accelerations, decelerations, lateral forces during turns, and the like. Each of these events will lead to a variation in the fuel level that is not due to any volume variation.

FIG. 2 schematically shows a fuel tank, such as the fuel tank **102,** in cross section. The tank **102** is equipped with a pressure sensor **114** at the base. The fuel **116** in the fuel tank **102** has a height $h$ at any given moment. The fuel **116** in the fuel tank **102** has a density $\rho$. The atmospheric pressure is denoted $P_0$ and the gravitational constant is denoted $g$. The pressure sensor **114** provides a measurement of a pressure $P$ at the base of the tank **102**. Using the law of hydrostatic pressure, the height $h$ can be determined, as follows:

$$h = \frac{P - P_0}{\rho g}$$

Based on the determined height $h$, the volume of fuel **116** remaining in the tank **102** can be calculated based on the known dimensions of the tank **102,** in particular the area of the tank **102** parallel to the surface of the fuel **116**. It is preferable to perform the pressure measurement while the vehicle **100** is sufficiently stationary, for example when the vehicle **100** is parked, when the engines **104a, 104b** are off, or when the engines **104a, 104b** are running at a sufficiently low level not to provide enough vibrations to disturb the measurement. Since the surface of the fuel **116** in the tank **102** stable constant in these scenarios, the volume of the fuel **116** inside the tank **102** can be determined accurately. Furthermore, by using a pressure sensor **114** with sufficient accuracy, the volume of the fuel **116** inside the tank **102** can be estimated very precisely, for example to a precision of around 0.5%. By comparison, current fuel gauges have a precision close to 10%.

FIG. 3 is a flow chart of a computer-implemented method **300** according to an example. The method **300** is for determining the fuel utilisation of a plurality of fuel utilisers in a vehicle, such as the fuel utilisers **104, 106, 108** in the vehicle **100**. The method **300** enables a fuel utilisation to be monitored in order to identify any fuel utilisers that require improvement or maintenance, or for any errors of faults to be determined based on deviation from expected values. The method **300** may be implemented by processing circuitry of a computer system (e.g., a control system of the vehicle **100** such as the control unit **200**).

At **302,** fuel depletion data for a fuel tank **102** of the vehicle **100** for a period is acquired. Specifically, a fuel depletion volume (the amount of fuel **116** that has left the fuel tank **102**) can be determined for the period. The period is a length of time during which fuel **116** is consumed from the fuel tank **102**. This may be an operation cycle of the vehicle **100** (e.g. a journey) or a portion of an operation cycle, for example a given amount of time or a given distance travelled. In this way, fuel utilisation can be determined in both long- and short-term contexts by appropriate selection of the length of the period, and patterns of fuel utilisation can be identified.

The pressure sensor **114** can be used to determine the fuel depletion volume, as discussed in relation to **FIG. 2.** For example, a pressure change in the fuel tank **102** over the period can be determined using the pressure sensor **114** (i.e. the pressure $P$ may be determined at the beginning of the period and at the end of the period, and a difference can be determined). A change in the height $h$ of the fuel **116** in the fuel tank **102** over the period can then be determined using the law of hydrostatic pressure. The fuel depletion volume can then be determined based on the change in the height $h$ and using the known dimensions of the fuel tank **102**. In another example, a volume of fuel **116** in the fuel tank **102** may be determined at the beginning of the period and at the end of the period, using the pressure sensor **114** and by determining the pressure $P$, the height $h$, and the volume of fuel **116** in the fuel tank **102** at each point. A difference in volume can then be calculated corresponding to the fuel depletion volume. Alternatively, the height $h$ may be determined at the beginning and end of the period, based on which the fuel depletion volume can then be determined.

In some examples, the flowmeters **112** can be used to determine the fuel depletion volume for the period. For example, the flowmeter **112d** for the main fuel line **110d** can output flow rate data for the period, based on which the fuel depletion volume for the period can be determined using the length of the period. Alternatively, the flowmeters **112a-c** for the individual fuel lines **110a-c** can output flow rate data for the period, based on which the total fuel depletion volume for the period can be determined. The flow rate data from the flowmeters **112a-c** could be used to cross-check the flow rate data from the flowmeter **112d** in the case that all flowmeters **112a-d** are present.

At **304,** activation data for a plurality of fuel utilisers is acquired. In particular, it is determined which of the fuel utilisers was active and for how long (a runtime duration) during the period. The operation status of each fuel utiliser may be logged over time, for example by a control system of the vehicle **100**. As discussed above, there can be a number of scenarios where different combinations of the fuel utilisers are active. In some scenarios, the engine **104a** and one or more of the auxiliary systems **106a, 106b, 106c,** and **108a** are active during the period. In some scenarios, the engine **104b** and the freezer system **106d** are active during the period. In some scenarios, the system **104c** (e.g. a vehicle parking heater) is are active during the period. It will be appreciated that data for any possible combination of active systems can be acquired.

At **306,** a fuel utilisation of at least two of the active fuel utilisers during the period is determined. In a first example, the fuel utilisation of at least two main systems **104** may be determined. In a second example, the fuel utilisation of at least one main system **104** and at last one auxiliary system **106, 108,** may be determined. In a third example, the fuel utilisation of at least two auxiliary systems **106, 108,** may be determined. The fuel depletion data acquired at **302** and the activation data acquired at **302** can be used to determine the fuel utilisation of each system. For example, the fuel utilisation can be determined using a set of linear equations that relate the fuel utilisation of the different fuel utilisers **104, 106, 108,** as discussed above. Alternatively, a neural network or other machine learning approach can be used to determine the fuel utilisation of each component.

Take a scenario where the engine **104a** and one or more of the auxiliary systems **106a, 106b, 106c,** and **108a** are active, the following set of equations can be formulated, where $X_1...X_9$ represents the fuel depletion for a given period, and $Y_i...Y_{32}$ represents the activation data for a given fuel utiliser **104, 106, 108** in terms of the fraction of the total period where the corresponding component is active.

$$104a = X_1$$

$$104a + Y_1*106a + Y_2*106b + Y_3*106c + Y_4*108a = X_2$$

$$104a + Y_5*106a + Y_6*106b + Y_7*106c + Y_8*108a = X_3$$

$$104a + Y_9*106a + Y_{10}*106b + Y_{11}*106c + Y_{12}*108a = X_4$$

$$104a + Y_{13}*106a + Y_{14}*106b + Y_{15}*106c + Y_{16}*108a = X_5$$

$$104a + Y_{17}*106a + Y_{18}*106b + Y_{19}*106c + Y_{20}*108a = X_6$$

$$104a + Y_{21}*106a + Y_{22}*106b + Y_{23}*106c + Y_{24}*108a = X_7$$

$$104a + Y_{25}*106a + Y_{26}*106b + Y_{27}*106c + Y_{28}*108a = X_8$$

$$104a + Y_{29}*106a + Y_{30}*106b + Y_{31}*106c + Y_{32}*108a = X_9$$

This is a set of 9 equations (or more) with 5 unknowns (104a, 106a, 106b, 106c, 108a) representing the individual fuel utilisation of the engine **104a** and the auxiliary systems **106a, 106b, 106c,** and **108a.** This is possible to solve to determine the fuel utilisations of the individual components. It will be appreciated that the number of periods for which fuel depletion data is acquired depends on the number of unknowns that are to be found. Each period provides one equation for the set of equations, and the total number of equations should match the number of unknowns. The method **300** is particularly advantageous when at least two unknowns are present. For example, the fuel utilisation of at least two main systems **104** may be unknown, and can be determined using the method **300.** Similarly, the fuel utilisation of at least one main system **104** and at last one auxiliary system **106, 108,** may be unknown, and can be determined using the method **300.** Similarly, the fuel utilisation of at least two auxiliary systems **106, 108,** may be unknown, and can be determined using the method **300.**

The fuel utilisation of other fuel utilisers in the vehicle **100** (e.g. the engine **104b,** the freezer system **106d,** and the parking heater **104c**) can also be determined in this way, or by direct measurement as discussed above. For example, the fuel consumption of the engine **104b** and the parking heater **104c** may be directly obtained by acquiring fuel depletion data for a period when each system is running alone, or for a period when both systems are running and one of the fuel consumptions is already known. The fuel utilisation of the freezer system **106d** can be determined based on fuel consumption of the engine **104b** and associated activation data (for example comparing the consumption of the engine **104b** when the freezer system **106d,** is on and off).

The method **300** allows fuel utilisation of each fuel utiliser **104, 106, 108** of a vehicle **100** to be determined in an accurate manner. In particular, the fuel utilisation of components for which the fuel utilisation is unknown or not directly measurable can be determined. Which components are at issue depends on the architecture of the vehicle (e.g. which fuel lines have flowmeters). For example, if only the flowmeter **112d** for the main fuel line **110d** is present, the method **300** can be used to determine the fuel utilisation of any of the fuel utilisers **104, 106, 108.** If one or more of the flowmeters **112a-c** are present, the fuel utilisation of the main systems **104** could be determined directly, and the method **300** can be used to determine the fuel utilisation of any of the auxiliary systems **106, 108.** This can help to identify which components are the highest fuel utilisers and to find the source of any unexpected increase (or decrease) in fuel consumption. Furthermore, accurate fuel utilisation information can be used to refine the range estimation for the vehicle 100 and to precisely track the $CO_2$ emissions of the vehicle. It will be appreciated that, using this approach, fuel utilisation information can be determined for any architecture of a vehicle where the power flows are known.

Tracking of expected values of fuel consumption and utilisation is one area where the approached discussed herein can be particular advantageous. In particular, it may be desired to compare the determined fuel utilisation of a particular fuel utiliser to reference fuel utilisation data in order to determine whether the fuel utilisation is in line with expected values.

**FIG. 4** is a flow chart of a computer-implemented method **400** according to an example. The method **400** is for determining any errors of faults in the vehicle **100** based on deviation of fuel utilisation from expected values. The method **400** may be implemented by processing circuitry of a computer system (e.g., a control system of the vehicle **100**). The method **400** may be considered as an extension of the method **300.**

At **402,** reference fuel utilisation data for one or more of the fuel utilisers is acquired. The reference fuel utilisation data may be acquired in any suitable way. For example certain systems and components may be provided with reference fuel utilisation data on purchase, or such data may be retrievable from a database. In some examples, the reference fuel utilisation data can be determined based on testing performed at the beginning of life of the vehicle **100.** The reference fuel utilisation data can be stored in a memory associated with the control system of the vehicle **100.**

Determining reference fuel utilisation data can be done in a similar way to the determination of current fuel utilisation data of the method **300.** In particular, test fuel depletion data for the fuel tank **102** can be acquired for one or more test periods in a similar manner to the acquisition of fuel depletion data in **302.** Test activation data for one or more of the fuel utilisers corresponding to each test period can be acquired in a similar manner to the acquisition of activation data in **304.** Reference fuel utilisation data for each fuel utiliser can then be determined based on the test fuel depletion data and the test activation data in a similar manner to the determination of fuel utilisation data in **306.** The reference fuel utilisation data can be updated over time in order to take into account changes in performance of the vehicle **100** and/or its components **104, 106, 108.** For example, the test procedure outlined above can be performed at various stages of the lifetime of the vehicle **100,** for example periodically (e.g. every week or month), in order to determine accurate and up-to-date reference fuel utilisation data.

In some examples, the reference fuel utilisation data for a given system or component may be expressed as a value in any suitable units, for example litres per hour (l/h). This value can be updated over time, as discussed above. However, fuel utilisation of a system or component may not only change over time, but may be dependent on other parameters. For example, fuel utilisation of a system or component may change with the ambient temperature T, a tyre friction (in the case of a steering pump), a difference between internal temperature and ambient temperature (in the case of a freezer or air conditioning system), or an oil pressure (in the case of a PTO) . As such, the reference fuel utilisation data may be expressed to reflect this, for example as a matrix or curve.

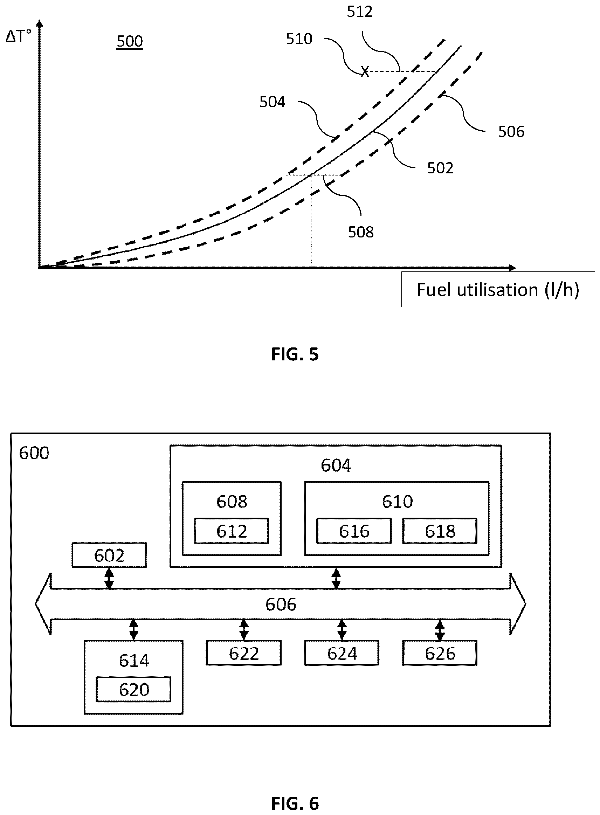

An example of such a curve in shown in **FIG. 5,** which shows a plot **500** of fuel utilisation of a component against the internal-ambient temperature difference. The plot **500** shows a reference curve **502** for fuel utilisation of the component, which increases with increasing temperature difference. Also shown are upper and lower buffer curves **504, 506,** which correspond in this example to a threshold **508** of 10% either side of the reference curve **502** for fuel utilisation for any given value of the temperature difference.

Returning to FIG. 4, at **404,** a difference between the determined fuel utilisation data and reference fuel utilisation data is determined. It is preferable to ensure that up-to-date reference fuel utilisation data, and that the reference fuel utilisation data is appropriate for the operating conditions of the vehicle (e.g. the temperature). A fuel utilisation value **510** for a given temperature difference is shown in **FIG. 5,** marked by an X. A difference **512** between the fuel utilisation value **510** and the reference curve **502** for given temperature difference can then be determined.

At **406,** the difference between the determined fuel utilisation data and reference fuel utilisation data is compared to a threshold. The threshold enables a determination of whether the determined (e.g. current) fuel utilisation data corresponds sufficiently to the reference (e.g. expected) fuel utilisation data. In one example, a threshold of 10% may be used. Similarly to the reference fuel utilisation data, the threshold can be updated over time and/or to take operating conditions of the vehicle **100** into account. In this way, any expected changes in fuel utilisation for a fuel utiliser **104, 106, 108** can be accounted for, and do not lead to false positives or negatives in the next step. Following the example of **FIG. 5,** the difference **512** can be compared to the threshold **508.**

In some examples, machine learning techniques, in particular deep learning, can be used to evaluate the fuel utilisation of the different fuel utiliser **104, 106, 108** each time a new measurement is available. In this way, changes in the reference fuel utilisation data and/or the threshold can be made over time and/or as operating conditions of the vehicle **100** change.

At **408,** if the difference determined at **404** is larger than the threshold (based on the comparison at **406**), the presence of an error associated with the vehicle **100** and/or one or more of its components **104, 106, 108** is determined.

The location of the error can be determined based on which set of data is found to be erroneous. For example, if the determined fuel utilisation data for the alternator **106a** differs by 12% from the reference (e.g. expected) fuel utilisation data for the alternator **106a,** it can be determined that an error is present in the alternator **106a** or its couplings. Following the example of **FIG. 5,** the difference **512** is larger than the threshold **508**, and so the presence of an error is determined.

At **410,** in response to determining the presence of an error at **408,** an action can be taken. For example, operation of one or more of the components **104, 106, 108** of the vehicle **100** can be limited. For example, a speed of the engine **104a** or **104b,** a current of the alternator **106a,** or use of the steering pump **108a** can be limited. In some examples, of one or more of the components **104, 106, 108** of the vehicle **100** can be deactivated completely. In some examples, an alert can be provided to an operator of the vehicle **100.** For example, a recommendation for maintenance or a warning to a driver or fleet manager can be provided. For example, a complete diagnostic report and component identification may be provided to a workshop. This can help to ensure that the components **104, 106, 108** of the vehicle **100 are** maintained as often as necessary to enable optimal performance.

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN, an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:

Example 1: A computer system (600) comprising processing circuitry (602) configured to: acquire fuel depletion data (212) for a fuel tank (102) of a vehicle (100) for a period (232); acquire activation data (204, 206, 208) corresponding to the period (232) for a plurality of fuel utilisers (104a, 104b, 106, 108) comprising at least one of an engine (104a, 104b) that consumes fuel (116) from the fuel tank (102) and an auxiliary system (106, 108) that is driven by the engine (104a, 104b); and determine a fuel utilisation (216, 510) of at least two of the plurality of fuel utilisers (104a, 104b, 106, 108) during the period (232) based on the fuel depletion data (212) and the activation data (204, 206, 208) for the plurality of fuel utilisers (104a, 104b, 106, 108).

Example 2: The computer system (600) of example 1, wherein the processing circuitry (602) is configured to acquire the fuel depletion data (212) by: determining a pressure change (220) in the fuel tank (102) over the period (232); and determining a fuel depletion volume (222) based on the determined pressure change (220) and the volume of the fuel tank (102).

Example 3: The computer system (600) of example 1, wherein the processing circuitry (602) is configured to acquire the fuel depletion data (212) by: determining flow rate data (218) of fuel (116) flowing from the fuel tank (102) over the period (232); and determining a fuel depletion volume (222) based on the determined flow rate data (218).

Example 4: The computer system (600) of any preceding example, wherein the plurality of fuel utilisers (104a, 104b, 106, 108) comprises one or more primary auxiliary systems (106) that are coupled to and driven by the engine (104a, 104b) and one or more secondary auxiliary systems (108) that are driven by the one or more primary auxiliary systems (106).

Example 5: The computer system (200, 600) of any preceding example, wherein the processing circuitry (602) is configured to determine a fuel utilisation (216, 510) of at least one of: at least two engines (104a, 104b); at least one engine (104a, 104b) and at least one auxiliary system (106, 108); and at least two auxiliary systems (106, 108).

Example 6: The computer system (600) of any preceding example, wherein the processing circuitry (602) is further configured to: acquire activation data (204) corresponding to the period (232) for one or more further systems (104c) that consume fuel (116) from the fuel tank (102); and determine a fuel utilisation (216, 510) of the one or more further systems (104c) during the period (232) based on the fuel depletion data (212) and the activation data (204) for the one or more further systems (104c).

Example 7: The computer system (600) of any preceding example, wherein the processing circuitry (602) is further configured to: acquire reference fuel utilisation data (502) for at least one of the plurality of fuel utilisers (104a, 104b, 106, 108); determine a difference (512) between the determined fuel utilisation (216, 510) and the reference fuel utilisation data (502); compare the determined difference (512) to a threshold (508); and determine the presence of an error (228) associated with at least one of the plurality of fuel utilisers (104a, 104b, 106, 108) in response to determining that the difference (508) is larger than the threshold (508).

Example 8: The computer system (600) of example 7, wherein, in response to determining the presence of an error (228), the processing circuitry (602) is further configured to limit operation of one or more of the plurality of fuel utilisers (104a, 104b, 106, 108), cause deactivation of the one or more of the plurality of fuel utilisers (104a, 104b, 106, 108), and/or provide an alert to an operator of the vehicle (100).

Example 9: The computer system (600) of example 7 or 8, wherein the processing circuitry (602) is configured to set the threshold (508) based on current operating conditions (230) of the vehicle (100).

Example 10: The computer system (600) of any of examples 7 to 9, wherein the processing circuitry (602) is configured to determine the reference fuel utilisation data (502) by: acquiring test fuel depletion data (212) for the fuel tank (102) for one or more test periods (232); acquiring test activation data (204, 206, 208) for at least one of the plurality of fuel utilisers (104a, 104b, 106, 108) corresponding to each test period (232); and determining reference fuel utilisation data (502) for at least one of the plurality of fuel utilisers (104a, 104b, 106, 108) based on the test fuel consumption data and the test activation data (204, 206, 208).

Example 11: The computer system (600) of any preceding claim, wherein the processing circuitry (602) is configured to determine the fuel utilisation (216, 510) based on a set of linear equations (224) describing relative fuel utilisation of the plurality of fuel utilisers (104a, 104b, 106, 108) and the one or more auxiliary systems (106, 108).

Example 12: A vehicle (100) comprising the computer system (600) of any preceding example.

Example 13: A computer-implemented method (300) comprising: acquiring (302), by processing circuitry (602) of a computer system (600), fuel depletion data (212) for a fuel tank (102) of a vehicle (100) for a period (232); acquiring (304), by the processing circuitry (602), activation data (204, 206, 208) for a plurality of fuel utilisers (104a, 104b, 106, 108) comprising at least one of an engine (104a, 104b) that consumes fuel (116) from the fuel tank (102) and an auxiliary system (106, 108) that is driven by the engine (104a, 104b); and determining (306), by the processing circuitry (602), a fuel utilisation (216, 510) of at least two of the plurality of fuel utilisers (104a, 104b, 106, 108) during the period (232) based on the fuel depletion data (212) and the activation data (204, 206, 208) for the plurality of fuel utilisers (104a, 104b, 106, 108).

Example 14: The computer-implemented method (300) of example 13, comprising acquiring the fuel depletion data (212), by the processing circuitry (602), by determining a pressure change (220) in the fuel tank (102) over the period (232); and determining a fuel depletion volume (222), by the processing circuitry (602), based on the determined pressure change (220) and the volume of the fuel tank (102).

Example 15: The computer-implemented method (300) of example 13, comprising acquiring the fuel depletion data (212), by the processing circuitry (602), by: determining flow rate data (218) of fuel (116) flowing from the fuel tank (102) over the period (232); and determining a fuel depletion volume (222) based on the determined flow rate data (218).

Example 16: The computer-implemented method (300) of any of examples 13 to 15 wherein the plurality of fuel utilisers (104a, 104b, 106, 108) comprises one or more primary auxiliary systems (106) that are coupled to and driven by the engine (104a, 104b) and one or more secondary auxiliary systems (108) that are driven by the one or more primary auxiliary systems (106).

Example 17: The computer system (200, 600) of any preceding example, comprising determining (306) a fuel utilisation (216, 510) of at least one of: at least two engines (104a, 104b); at least one engine (104a, 104b) and at least one auxiliary system (106, 108); and at least two auxiliary systems (106, 108).

Example 18: The computer-implemented method (300) of any of examples 13 to 17 comprising acquiring, by the processing circuitry (602), activation data (204) corresponding to the period (232) for one or more further systems (104c) that consume fuel (116) from the fuel tank (102); and determining, by the processing circuitry (602), a fuel utilisation (216, 510) of the one or more further systems (104c) during the period (232) based on the fuel depletion data (212) and the activation data (204) for the one or more further systems (104c).

Example 19: The computer-implemented method (300) of any of examples 13 to 18, further comprising acquiring (402), by the processing circuitry (602), reference fuel utilisation data (502) for at least one of the plurality of fuel utilisers (104a, 104b, 106, 108); determining (404), by the processing circuitry (602), a difference (512) between the determined fuel utilisation (216, 510) and the reference fuel utilisation data (502); comparing (406), by the processing circuitry (602), the determined difference (512) to a threshold (508); and determining (408), by the processing circuitry (602), the presence of an error (228) associated with at least one of the plurality of fuel utilisers (104a, 104b, 106, 108) in response to determining that the difference (512) is larger than the threshold (508).

Example 20: The computer-implemented method (300) of example 19, further comprising, in response to determining the presence of an error (228), limiting, by the processing circuitry (602), operation of one or more of the plurality of fuel utilisers (104a, 104b, 106, 108), causing deactivation, by the processing circuitry (602), of the one or more of the plurality of fuel utilisers (104a, 104b, 106, 108), and/or providing, by the processing circuitry (602), an alert to an operator of the vehicle (100).

Example 21: The computer-implemented method (300) of example 19 or 20, comprising setting, by the processing circuitry (602), the threshold (508) based on current operating conditions (230) of the vehicle (100).

Example 22: The computer-implemented method (300) of examples 19 to 21, comprising determining the reference fuel utilisation data (502), by the processing circuitry (602), by: acquiring test fuel depletion data (212) for the fuel tank (102) for one or more test periods (232); acquiring test activation data (204, 206, 208) for at least one of the plurality of fuel utilisers (104a, 104b, 106, 108) corresponding to each test period (232); and determining reference fuel utilisation data (502) for at least one of the plurality of fuel utilisers (104a, 104b, 106, 108) based on the test fuel consumption data and the test activation data (204, 206, 208).

Example 23: The computer-implemented method (300) of any of examples 13 to 22, comprising determining, by the processing circuitry (602), the fuel utilisation (216, 510) based on a set of linear equations (224) describing relative fuel utilisation of the plurality of fuel utilisers (104a, 104b, 106, 108) and the one or more auxiliary systems (106, 108).

Example 24: A computer program product comprising program code for performing, when executed by processing circuitry (602), the computer-implemented method (300) of any of examples 13 to 23.

Example 25: A non-transitory computer-readable storage medium comprising instructions, which when executed by processing circuitry (602), cause the processing circuitry to perform the computer-implemented method (300) of any of examples 13 to 23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

### Claims

1. A computer system (200, 600) comprising processing circuitry (602) configured to:

   acquire fuel depletion data (212) for a fuel tank (102) of a vehicle (100) for a period (232);
   acquire activation data (204, 206, 208) corresponding to the period (232) for a plurality of fuel utilisers (104a, 104b, 106, 108) comprising at least one of an engine (104a, 104b) that consumes fuel (116) from the fuel tank (102) and an auxiliary system (106, 108) that is driven by the engine (104a, 104b); and
   determine a fuel utilisation (216, 510) of at least two of the fuel utilisers (104a, 104b, 106, 108) during the period (232) based on the fuel depletion data (212) and the activation data (204, 206, 208) for the plurality of fuel utilisers (104a, 104b, 106, 108).

2. The computer system (200, 600) of claim 1, wherein the processing circuitry (602) is configured to acquire the fuel depletion data (212) by:

   determining a pressure change (220) in the fuel tank (102) over the period (232); and
   determining a fuel depletion volume (222) based on the determined pressure change (220) and the volume of the fuel tank (102).

3. The computer system (200, 600) of claim 1, wherein the processing circuitry (602) is configured to acquire the fuel depletion data (212) by:

   determining flow rate data (218) of fuel (116) flowing from the fuel tank (102) over the period (232); and
   determining a fuel depletion volume (222) based on the determined flow rate data (218).

4. The computer system (200, 600) of any preceding claim, wherein the plurality of fuel utilisers (104a, 104b, 106, 108) comprises:

   one or more primary auxiliary systems (106) that are coupled to and driven by the one or more engines (104a, 104b); and
   one or more secondary auxiliary systems (108) that are driven by the one or more primary auxiliary systems (106).

5. The computer system (200, 600) of any preceding claim, wherein the processing circuitry (602) is configured to determine a fuel utilisation (216, 510) of at least one of:

   at least two engines (104a, 104b);
   at least one engine (104a, 104b) and at least one auxiliary system (106, 108); and
   at least two auxiliary systems (106, 108).

6. The computer system (200, 600) of any preceding claim, wherein the processing circuitry (602) is further configured to:

   acquire activation data (204) corresponding to the period (232) for one or more further systems (104c) that consume fuel (116) from the fuel tank (102); and
   determine a fuel utilisation (216, 510) of the one or more further systems (104c) during the period (232) based on the fuel depletion data (212) and the activation data (204) for the one or more further systems (104c).

7. The computer system (200, 600) of any preceding claim, wherein the processing circuitry (602) is further configured to:

   acquire reference fuel utilisation data (502) for at least one of the plurality of fuel utilisers (104a, 104b, 106, 108);
   determine a difference (512) between the determined fuel utilisation (216, 510) and the reference fuel utilisation data (502);
   compare the determined difference (512) to a threshold (508); and
   determine the presence of an error (228) associated with at least one of the plurality of fuel utilisers (104a, 104b, 106, 108) in response to determining that the difference (512) is larger than the threshold (508).

8. The computer system (200, 600) of claim 7, wherein, in response to determining the presence of an error (228), the processing circuitry (602) is further configured to at least one of:

   limit operation of at least one of the plurality of fuel utilisers (104a, 104b, 106, 108),
   cause deactivation of at least one of the plurality of fuel utilisers (104a, 104b, 106, 108), or
   provide an alert to an operator of the vehicle (100).

9. The computer system (200, 600) of claim 7 or 8, wherein the processing circuitry (602) is configured to set the threshold (508) based on current operating conditions (230) of the vehicle (100).

10. The computer system (200, 600) of any of claims 7 to 9, wherein the processing circuitry (602) is configured to determine the reference fuel utilisation data (502) by:

acquiring test fuel depletion data (212) for the fuel tank (102) for one or more test periods (232);
acquiring test activation data (204, 206, 208) for at least one of the plurality of fuel utilisers (104a, 104b, 106, 108) corresponding to each test period (232); and
determining reference fuel utilisation data (502) for at least one of the plurality of fuel utilisers (104a, 104b, 106, 108) based on the test fuel depletion data (212) and the test activation data (204, 206, 208).

11. The computer system (200, 600) of any preceding claim, wherein the processing circuitry (602) is configured to determine the fuel utilisation (216, 510) based on a set of linear equations (224) describing relative fuel utilisation of the plurality of fuel utilisers (104a, 104b, 106, 108).

12. A vehicle (100) comprising the computer system (200, 600) of any preceding claim.

13. A computer-implemented method (300) comprising:

acquiring (302), by processing circuitry (602) of a computer system (200, 600), fuel depletion data (212) for a fuel tank (102) of a vehicle (100) for a period (232);
acquiring (304), by the processing circuitry (602), activation data (204, 206, 208) for a plurality of fuel utilisers (104a, 104b, 106, 108) comprising at least one of an engine (104a, 104b) that consumes fuel (116) from the fuel tank (102) and an auxiliary systems (106, 108) that is driven by the one or more engines (104a, 104b); and
determining (306), by the processing circuitry (602), a fuel utilisation (216, 510) of at least two of the fuel utilisers (104a, 104b, 106, 108) during the period (232) based on the fuel depletion data (212) and the activation data (204, 206, 208) for the plurality of fuel utilisers (104a, 104b, 106, 108).

14. A computer program product comprising program code for performing, when executed by processing circuitry (602), the computer-implemented method (300) of claim 13.

15. A non-transitory computer-readable storage medium comprising instructions, which when executed by processing circuitry (602), cause the processing circuitry to perform the computer-implemented method (300) of claim 13.

**Amended claims in accordance with Rule 137(2) EPC.**

1. A computer system (200, 600) comprising processing circuitry (602) configured to:

acquire fuel depletion data (212) for a fuel tank (102) of a vehicle (100) for a period (232);
acquire activation data (204, 206, 208) corresponding to the period (232) for a plurality of fuel utilisers (104a, 104b, 106, 108) comprising at least one of an engine (104a, 104b) that consumes fuel (116) from the fuel tank (102), one or more primary auxiliary systems (106) that are coupled to and driven by the one or more engines (104a, 104b), and one or more secondary auxiliary systems (108) that are driven by the one or more primary auxiliary systems (106); and
determine a fuel utilisation (216, 510) of at least two of the fuel utilisers (104a, 104b, 106, 108) during the period (232) based on the fuel depletion data (212) and the activation data (204, 206, 208) for the plurality of fuel utilisers (104a, 104b, 106, 108).

2. The computer system (200, 600) of claim 1, wherein the processing circuitry (602) is configured to acquire the fuel depletion data (212) by:

determining a pressure change (220) in the fuel tank (102) over the period (232); and
determining a fuel depletion volume (222) based on the determined pressure change (220) and the volume of the fuel tank (102).

3. The computer system (200, 600) of claim 1, wherein the processing circuitry (602) is configured to acquire the fuel depletion data (212) by:

determining flow rate data (218) of fuel (116) flowing from the fuel tank (102) over the period (232); and
determining a fuel depletion volume (222) based on the determined flow rate data (218).

4. The computer system (200, 600) of any preceding claim, wherein the processing circuitry (602) is configured to determine a fuel utilisation (216, 510) of at least one of:

at least two engines (104a, 104b);
at least one engine (104a, 104b) and at least one auxiliary system (106, 108); and
at least two auxiliary systems (106, 108).

5. The computer system (200, 600) of any preceding claim, wherein the processing circuitry (602) is further configured to:

acquire activation data (204) corresponding to the period (232) for one or more further systems (104c) that consume fuel (116) from the fuel tank (102); and
determine a fuel utilisation (216, 510) of the one or more further systems (104c) during the period (232) based on the fuel depletion data (212) and the activation data (204) for the one or more further systems (104c).

6. The computer system (200, 600) of any preceding claim, wherein the processing circuitry (602) is further configured to:

acquire reference fuel utilisation data (502) for at least one of the plurality of fuel utilisers (104a, 104b, 106, 108);
determine a difference (512) between the determined fuel utilisation (216, 510) and the reference fuel utilisation data (502);
compare the determined difference (512) to a threshold (508); and
determine the presence of an error (228) associated with at least one of the plurality of fuel utilisers (104a, 104b, 106, 108) in response to determining that the difference (512) is larger than the threshold (508).

7. The computer system (200, 600) of claim 6, wherein, in response to determining the presence of an error (228), the processing circuitry (602) is further configured to at least one of:

limit operation of at least one of the plurality of fuel utilisers (104a, 104b, 106, 108),
cause deactivation of at least one of the plurality of fuel utilisers (104a, 104b, 106, 108), or
provide an alert to an operator of the vehicle (100).

8. The computer system (200, 600) of claim 6 or 7, wherein the processing circuitry (602) is configured to set the threshold (508) based on current operating conditions (230) of the vehicle (100).

9. The computer system (200, 600) of any of claims 6 to 8, wherein the processing circuitry (602) is configured to determine the reference fuel utilisation data (502) by:

acquiring test fuel depletion data (212) for the fuel tank (102) for one or more test periods (232);
acquiring test activation data (204, 206, 208) for at least one of the plurality of fuel utilisers (104a, 104b, 106, 108) corresponding to each test period (232); and
determining reference fuel utilisation data (502) for at least one of the plurality of fuel utilisers (104a, 104b, 106, 108) based on the test fuel depletion data (212) and the test activation data (204, 206, 208).

10. The computer system (200, 600) of any preceding claim, wherein the processing circuitry (602) is configured to determine the fuel utilisation (216, 510) based on a set of linear equations (224) describing relative fuel utilisation of the plurality of fuel utilisers (104a, 104b, 106, 108).

11. A vehicle (100) comprising the computer system (200, 600) of any preceding claim.

12. A computer-implemented method (300) comprising:

acquiring (302), by processing circuitry (602) of a computer system (200, 600), fuel depletion data (212) for a fuel tank (102) of a vehicle (100) for a period (232);
acquiring (304), by the processing circuitry (602), activation data (204, 206, 208) for a plurality of fuel utilisers (104a, 104b, 106, 108) comprising at least one of an engine (104a, 104b) that consumes fuel (116) from the fuel tank (102), one or more primary auxiliary systems (106) that are coupled to and driven by the one or more engines (104a, 104b), and one or more secondary auxiliary systems (108) that are driven by the one or more primary auxiliary systems (106); and
determining (306), by the processing circuitry (602), a fuel utilisation (216, 510) of at least two of the fuel utilisers (104a, 104b, 106, 108) during the period (232) based on the fuel depletion data (212) and the activation data (204, 206, 208) for the plurality of fuel utilisers (104a, 104b, 106, 108).

13. A computer program product comprising program code for performing, when executed by processing circuitry (602), the computer-implemented method (300) of claim 12.

14. A non-transitory computer-readable storage medium comprising instructions, which when executed by processing circuitry (602), cause the processing circuitry to perform the computer-implemented method (300) of claim 12.

**FIG. 1A**

**FIG. 1B**

102

$P_0$

$\rho$

$h$

116

114

**FIG. 2**

300

```
┌─────────────────────────────────────────────────┐
│  Acquiring fuel depletion data for a fuel tank   │
│         of a vehicle for a period                │  ⟩ 302
└─────────────────────────────────────────────────┘
                        │
                        ▼
┌─────────────────────────────────────────────────┐
│  Acquiring activation data for one or more fuel  │
│           utilisers of the vehicle               │  ⟩ 304
└─────────────────────────────────────────────────┘
                        │
                        ▼
┌─────────────────────────────────────────────────┐
│  Determining a fuel utilisation of each of the   │
│      active fuel utilisers during the period     │  ⟩ 306
└─────────────────────────────────────────────────┘
```

**FIG. 3**

400

```
┌─────────────────────────────────────────────────┐
│ Acquiring reference fuel utilisation data for one│
│      or more fuel utilisers of the vehicle       │  ⟩ 402
└─────────────────────────────────────────────────┘
                        │
                        ▼
┌─────────────────────────────────────────────────┐
│  Determining a difference between the determined │
│  fuel utilisation and reference fuel utilisation │  ⟩ 404
│                    data                          │
└─────────────────────────────────────────────────┘
                        │
                        ▼
┌─────────────────────────────────────────────────┐
│  Comparing the determined difference to a        │  ⟩ 406
│                  threshold                       │
└─────────────────────────────────────────────────┘
                        │
                        ▼
┌─────────────────────────────────────────────────┐
│ Determining the presence of an error associated  │
│ with one or more of the fuel utilisers if the    │  ⟩ 408
│ difference is larger than the threshold          │
└─────────────────────────────────────────────────┘
                        │
                        ▼
┌ ─ ─ ─ ─ ─ ─ ─ ─ ─ ─ ─ ─ ─ ─ ─ ─ ─ ─ ─ ─ ─ ─ ─ ─ ┐
│ Taking an action in response to determining the  │
│             presence of an error                 │  ⟩ 410
└ ─ ─ ─ ─ ─ ─ ─ ─ ─ ─ ─ ─ ─ ─ ─ ─ ─ ─ ─ ─ ─ ─ ─ ─ ┘
```

**FIG. 4**

**FIG. 5**

**FIG. 6**

Europäisches
Patentamt

European
Patent Office

Office européen
des brevets

# EUROPEAN SEARCH REPORT

**Application Number**

EP 24 17 3994

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2006/190149 A1 (LAPANT TODD [US]) 24 August 2006 (2006-08-24) * paragraphs [0003] - [0007], [0031], [0180] * ----- | 1-15 | INV. G01F9/00 F02D25/00 F02D45/00 |
| Y | EP 2 275 317 A1 (CELADON APPLIC LLC [US]) 19 January 2011 (2011-01-19) * paragraphs [0001] - [0003], [0036] * ----- | 1-15 | ADD. B60K15/03 G01F23/14 |
| A | US 11 493 378 B2 (CATERPILLAR INC [US]) 8 November 2022 (2022-11-08) * column 2, line 26 - line 41 * ----- | 2 | |
| A | EP 2 837 807 B1 (HORIBA LTD [JP]) 18 November 2020 (2020-11-18) * paragraph [0003] * ----- | 3 | |
| A | ZHONG LIANG: "Energy Consumption Test and Analysis Methodology for Heavy-Duty Vehicle Engine Accessories", SAE INTERNATIONAL JOURNAL OF ENGINES, vol. 11, no. 5, 16 February 2018 (2018-02-16), pages 539-546, XP093210141, ISSN: 1946-3944, DOI: 10.4271/03-11-05-0036 * the whole document * ----- | 4 | **TECHNICAL FIELDS SEARCHED (IPC)** G01F B60K F02D |
| A | CN 107 499 256 A (BORGWARD AUTOMOTIVE CHINA CO LTD) 22 December 2017 (2017-12-22) * the whole document * ----- | 7-10 | |

The present search report has been drawn up for all claims

| Place of search | Date of completion of the search | Examiner |
|---|---|---|
| The Hague | 30 September 2024 | Nierhaus, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

**EP 4 644 846 A1**

## ANNEX TO THE EUROPEAN SEARCH REPORT
## ON EUROPEAN PATENT APPLICATION NO.

EP 24 17 3994

30-09-2024

| Patent document cited in search report | | Publication date | Patent family member(s) | | Publication date |
|---|---|---|---|---|---|
| US 2006190149 | A1 | 24-08-2006 | NONE | | |
| EP 2275317 | A1 | 19-01-2011 | EP | 2275317 A1 | 19-01-2011 |
| | | | JP | 2011022136 A | 03-02-2011 |
| | | | US | 2010138142 A1 | 03-06-2010 |
| | | | WO | 2011008316 A1 | 20-01-2011 |
| US 11493378 | B2 | 08-11-2022 | NONE | | |
| EP 2837807 | B1 | 18-11-2020 | CN | 104655215 A | 27-05-2015 |
| | | | DE | 202014006185 U1 | 26-11-2014 |
| | | | EP | 2837807 A1 | 18-02-2015 |
| | | | US | 2015046101 A1 | 12-02-2015 |
| CN 107499256 | A | 22-12-2017 | NONE | | |

EPO FORM P0459

For more details about this annex : see Official Journal of the European Patent Office, No. 12/82